# EUROPÄISCHE PATENTANMELDUNG

(11) **EP 4 787 700 A1**
(43) Veröffentlichungstag der Anmeldung: **05.08.2026**
(21) Anmeldenummer: 26155189.9
(22) Anmeldetag: 29.01.2026
(51) Int. Cl.: H02M 3/335, H02M 3/158, H02M 1/00

(54) **SCHALTUNGSANORDNUNG UND VERFAHREN ZUM BETREIBEN EINES TRAKTIONSSTRANGS EINES FAHRZEUGS**

(30) Priorität: 03.02.2025 DE 102025103753
(71) Anmelder: Volkswagen Aktiengesellschaft, 38440 Wolfsburg (DE)
(72) Erfinder: Gaona, Daniel, 38440 Wolfsburg (DE); Kusch, Rüdiger, 38440 Wolfsburg (DE)

(57) **Zusammenfassung**

Die Erfindung betrifft eine Schaltungsanordnung (1), umfassend ein On-Board-Ladegerät (2), wobei das On-Board-Ladegerät (2) eine erste Brückenschaltung (3-1), eine zweite Brückenschaltung (3-2) und ein magnetisches Kopplungsmittel (4) zur galvanischen Trennung aufweist, wobei Mittenabgriffe (5) der ersten Brückenschaltung (3-1) und der zweiten Brückenschaltung (3-2) über das magnetische Kopplungsmittel (4) miteinander verbunden sind, und einen Zwischenkreiskondensator (C1), wobei auf Seiten der zweiten Brückenschaltung (3-2) ein Mittenabgriff (6) an dem magnetischen Kopplungsmittel (4) abgegriffen ist und zumindest in mindestens einem ausgewählten Betriebszustand mit einer Highside (HS) des Zwischenkreiskondensators (C1) verbunden ist. Ferner betrifft die Erfindung ein Verfahren zum Betreiben eines Traktionsstrangs (10) eines Fahrzeugs.

## Beschreibung

Die Erfindung betrifft eine Schaltungsanordnung und ein Verfahren zum Betreiben eines Traktionsstrangs eines Fahrzeugs.

Bei Elektrofahrzeugen ist ein Gleichstromzwischenkreis eines Traktionswechselrichters (Pulswechselrichter) direkt mit einer Batterie verbunden. Für einen großen Teil des Fahrzyklus ist eine optimale Gleichstromzwischenkreisspannung, die der Wechselrichter benötigt, um die beste Effizienz zu erzielen, niedriger als die Spannung der Batterie. Die optimale Gleichstromzwischenkreisspannung steigt hierbei mit der Geschwindigkeit. Insbesondere erfordert ein Großteil des WLTC-Zyklus eine niedrigere Spannung als die von der Batterie gelieferte Spannung. Wenn die Spannung im Gleichstromzwischenkreis angepasst werden kann, um dem optimalen Bereich zu folgen, kann die Effizienz des Antriebsstrangs erhöht werden. Die Verbesserung der Effizienz ist dann insbesondere ein Ergebnis von geringeren Schaltverlusten im Wechselrichter und der geringeren elektromagnetischen Verluste. Hierdurch lässt sich im Ergebnis bei gleicher Batteriekapazität insbesondere eine Reichweite erhöhen. Ferner lässt sich bei einer vorgegebenen Reichweite eine Batteriekapazität verkleinern und somit Kosten einsparen.

Es ist bekannt, einen zusätzlichen Abwärtswandler (auch als Tiefsetzsteller bezeichnet) zwischen der Batterie und dem Wechselrichter zu verwenden. Dies ist jedoch nachteilig aufgrund der zusätzlich erforderlichen Komponenten: zwei zusätzliche Halbleiterschalter, ein Relais/Schütz/Schalter und eine Induktivität sind die mindestens erforderlichen Komponenten. Darüber hinaus werden ferner insbesondere weitere Zusatzkomponenten benötigt, wie Gatetreiber, Sensoren, Controller usw. Diese zusätzlichen Komponenten erhöhen die Kosten, ein Gewicht und einen Bauraumbedarf der gesamten Lösung. Für einen 50-kW-Abwärtswandler werden beispielsweise etwa 6 kg zusätzlich benötigt (vgl. Timijan Velić et al., A Pareto Based Comparison of DC/DC Converters for Variable DC-Link Voltage in Electric Vehicles, IEEE Open Journal of Power Electronics, vol. 4, pp. 1011-1024, 2023, doi: 10.1109/OJPEL.2023.3333255).

Der Erfindung liegt die Aufgabe zu Grunde, eine Lösung für das vorgenannte Problem anzugeben.

Die Aufgabe wird erfindungsgemäß durch eine Schaltungsanordnung mit den Merkmalen des Patentanspruchs 1 und ein Verfahren mit den Merkmalen des Patentanspruchs 10 gelöst. Vorteilhafte Ausgestaltungen der Erfindung ergeben sich aus den Unteransprüchen.

Insbesondere wird eine Schaltungsanordnung geschaffen, umfassend ein On-Board-Ladegerät, wobei das On-Board-Ladegerät eine erste Brückenschaltung, eine zweite Brückenschaltung und ein magnetisches Kopplungsmittel zur galvanischen Trennung aufweist, wobei Mittenabgriffe der ersten Brückenschaltung und der zweiten Brückenschaltung über das magnetische Kopplungsmittel miteinander verbunden sind, und einen Zwischenkreiskondensator, wobei auf Seiten der zweiten Brückenschaltung ein Mittenabgriff an dem magnetischen Kopplungsmittel abgegriffen ist und zumindest in mindestens einem ausgewählten Betriebszustand mit einer Highside des Zwischenkreiskondensators verbunden ist.

Ferner wird insbesondere ein Verfahren zum Betreiben eines Traktionsstrangs eines Fahrzeugs zur Verfügung gestellt, umfassend: Betreiben einer Schaltungsanordnung gemäß einer der beschriebenen Ausführungsformen, wobei die zweite Brückenschaltung des On-Board-Ladegeräts der Schaltungsanordnung zumindest in einem ausgewählten Betriebszustand als Tiefsetzsteller betrieben wird.

Die Schaltungsanordnung und das Verfahren ermöglichen es, eine Effizienz beim Speisen einer elektrischen Maschine zu erhöhen, ohne dass hierfür die voranstehend beschriebene Anzahl von zusätzlichen Komponenten notwendig ist. Einer der Grundgedanken für die Schaltungsanordnung und das Verfahren ist, Komponenten eines On-Board-Ladegeräts zumindest während mindestens eines ausgewählten Betriebszustands, insbesondere beim Speisen einer elektrischen Maschine unterhalb der Volllast während des Fahrens, als Tiefsetzsteller zu verwenden. Dies wird erreicht, indem eine zweite Brückenschaltung des On-Board-Ladegeräts, welche insbesondere mit einer (Hochvolt-)Batterie verbunden ist, und ein Teil eines magnetischen Kopplungsmittels, welches im On-Board-Ladegerät zur galvanischen Trennung der Brückenschaltungen dient, gemeinsam als Tiefsetzsteller verwendet werden. Dies erfolgt insbesondere in einem Betriebszustand, in dem kein Laden der Batterie erfolgt und in dem insbesondere eine Gleichstromzwischenkreisspannung an dem Zwischenkreiskondensator geringer sein soll als die Batteriespannung. Es ist insbesondere vorgesehen, dass hierzu auf Seiten der zweiten Brückenschaltung ein Mittenabgriff an dem magnetischen Kopplungsmittel abgegriffen ist und zumindest in dem mindestens einen ausgewählten Betriebszustand mit einer Highside des Zwischenkreiskondensators verbunden ist. Die zweite Brückenschaltung des On-Board-Ladegeräts der Schaltungsanordnung wird verfahrensgemäß zumindest in dem ausgewählten Betriebszustand als Tiefsetzsteller betrieben.

Es ist insbesondere vorgesehen, dass die Brückenschaltungen der Schaltungsanordnung mittels einer hierfür eingerichteten Steuerschaltung gemäß den jeweiligen Betriebszuständen (Laden, Fahrmodus unterhalb Volllast, Fahrmodus bei Volllast) angesteuert werden.

Das magnetische Kopplungsmittel umfasst insbesondere mindestens einen Transformator. Sofern ein (einzelner) Transformator vorgesehen ist, umfasst der Transformator insbesondere einen Kontakt für den Mittenabgriff. Der Mittenabgriff ist insbesondere ein Abgriff in der Mitte einer Spule auf einer Seite des Transformators. Es können auch zwei in Reihe geschaltete Transformatoren vorgesehen sein. Der Mittenabgriff korrespondiert in diesem Fall mit einem Abgriff an einem Punkt, an dem Spulen der beiden Transformatoren elektrisch miteinander verbunden sind. Ein einzelner magnetischer Transformator ist insbesondere vorteilhaft, da eine Magnetisierungsinduktivität der einen Hälfte den Fluss der anderen Hälfte aufheben würde. Somit kann der Transformator bzw. die Induktivität kompakter ausgebildet sein als bei einer Lösung mit zwei Transformatoren.

Ist eine Induktivität des magnetischen Kopplungsmittels bzw. der hiervon verwendeten Induktivität zu gering, kann zusätzlich eine weitere Induktivität vorgesehen sein, beispielsweise in Form einer zusätzlichen Spule, die zumindest in dem mindestens einen Betriebszustand zwischen den Mittenabgriff des magnetischen Kopplungsmittels und die Highside des Zwischenkreiskondensators geschaltet ist.

Weist die zweite Brückenschaltung zwei Halbbrücken auf, so können insbesondere beide Halbbrücken zum Bereitstellen des Tiefsetzstellers verwendet werden. Hierdurch können die Halbleiterbauelemente der zweiten Brückenschaltung mit einer jeweils geringeren Leistung betrieben werden, sodass eine Alterung verringert und somit eine Lebensdauer erhöht werden kann.

Die Schaltungsanordnung kann insbesondere in einem Fahrzeug, insbesondere einem Kraftfahrzeug, verwendet werden. Grundsätzlich kann die Schaltungsanordnung aber auch in anderen Anwendungsszenarien verwendet werden.

In einer Ausführungsform ist vorgesehen, dass die Schaltungsanordnung einen Bypassschalter aufweist, wobei der Bypassschalter auf einer Seite mit einer Highside der zweiten Brückenschaltung und auf einer anderen Seite zumindest in mindestens einem ausgewählten Betriebszustand mit der Highside des Zwischenkreiskondensators verbunden ist. Hierdurch kann eine direkte Verbindung zwischen der Batterie und dem Zwischenkreiskondensator hergestellt werden. Dies erfolgt insbesondere, wenn eine Funktion des Tiefsetzstellers nicht benötigt wird, sondern die volle Batteriespannung als Gleichstromzwischenkreisspannung bereitgestellt werden soll (das heißt insbesondere bei Volllast). Der Bypassschalter muss insbesondere zum schnellen Schalten (insbesondere im Bereich von Millisekunden) ausgebildet sein, da ein Öffnen und Schließen zum Ausbilden des Bypasses insbesondere während des Fahrens erfolgen soll.

Bei einer Ausführungsform des Verfahrens ist entsprechend vorgesehen, dass bei Überschreiten einer vorgegebenen Leistungsgröße einer über die Schaltungsanordnung gespeisten elektrischen Maschine mittels eines Bypassschalters eine elektrische Verbindung zwischen einer Highside der zweiten Brückenschaltung und dem Zwischenkreiskondensator hergestellt wird.

In einer Ausführungsform ist vorgesehen, dass die Schaltungsanordnung einen Schalter aufweist, wobei eine Seite des Schalters mit dem Mittenabgriff an dem magnetischen Kopplungsmittel verbunden ist, und wobei eine andere Seite des Schalters mit der Highside des Zwischenkreiskondensators verbunden ist. Hierdurch kann während des Ladens mittels des On-Board-Ladegeräts eine Verbindung zwischen dem Mittenabgriff des magnetischen Kopplungsmittels und dem Zwischenkreiskondensator unterbrochen werden.

Bei einer Ausführungsform des Verfahrens ist entsprechend vorgesehen, dass eine Verbindung zwischen dem Mittenabgriff an dem magnetischen Kopplungsmittel und dem Zwischenkreiskondensator mittels eines Schalters getrennt wird, wenn das On-Board-Ladegerät zum Laden verwendet wird.

In einer Ausführungsform ist vorgesehen, dass der Bypassschalter als Halbleiterschalter ausgebildet ist. Der Halbleiterschalter kann beispielsweise ein Metall-Oxid-Halbleiter-Feldeffekttransistor (MOSFET) oder Bipolartransistor mit isolierter Gate-Elektrode (IGBT) sein.

In einer Ausführungsform ist vorgesehen, dass die Schaltungsanordnung einen 3-Stellungsschalter aufweist, wobei der 3-Stellungsschalter über die Stellungen den Bypassschalter und den Schalter ausbildet. Hierdurch können beide Schalter mittels einer einzigen Komponente bereitgestellt werden.

In einer Ausführungsform ist vorgesehen, dass die Schaltungsanordnung eine Pulswechselrichterschaltung und eine Power Factor Converter-Schaltung umfasst, wobei die Pulswechselrichterschaltung und die Power Factor-Schaltung beide mit dem Zwischenkreiskondensator verbunden sind.

In einer Ausführungsform ist vorgesehen, dass die Schaltungsanordnung eine Pulswechselrichterschaltung und eine Power Factor Converter-Schaltung umfasst, wobei die Pulswechselrichterschaltung mit dem Zwischenkreiskondensator verbunden ist, wobei die Power-Factor-Schaltung mit einer Highside und einer Lowside der ersten Brückenschaltung verbunden ist.

In einer Ausführungsform ist vorgesehen, dass die Schaltungsanordnung eine kombinierte Pulswechselrichter-/Power Factor Converter-Schaltung umfasst, welche mit dem Zwischenkreiskondensator verbunden ist. Hierdurch können Komponenten der Pulswechselrichterschaltung und der Power Factor Converter-Schaltung gemeinsam genutzt werden, wodurch sich eine Anzahl von Komponenten weiter reduzieren lässt.

Die Schaltungsanordnung kann ferner einen weiteren Schalter umfassen, wobei eine Seite des weiteren Schalters mit einer Lowside der zweiten Brückenschaltung und eine andere Seite des weiteren Schalters mit einer Lowside des Zwischenkreiskondensators verbunden ist. Es ist insbesondere vorgesehen, dass der weitere Schalter beim Laden mittels des On-Board-Ladegeräts geöffnet ist oder geöffnet wird. Es ist ferner insbesondere vorgesehen, dass der weitere Schalter im Betriebszustand, in dem die zweite Brückenschaltung als Tiefsetzsteller verwendet wird, geschlossen ist oder geschlossen wird.

Es wird ferner auch ein Traktionsstrang für ein Fahrzeug bereitgestellt, umfassend eine Schaltungsanordnung nach einer der in dieser Offenbarung beschriebenen Ausführungsformen, wobei die zweite Brückenschaltung auf einer Highside und einer Lowside mit einer Hochvoltbatterie verbunden ist. Der Traktionsstrang umfasst ferner insbesondere eine (Hochvolt-)Batterie und eine elektrische Maschine.

Nachfolgend wird die Erfindung anhand bevorzugter Ausführungsbeispiele unter Bezugnahme auf die Figuren näher erläutert. Hierbei zeigen:
- Fig. 1: eine schematische Darstellung von Ausführungsformen der Schaltungsanordnung;
- Fig. 2: eine schematische Darstellung einer weiteren Ausführungsform der Schaltungsanordnung;
- Fig. 3: eine schematische Darstellung einer weiteren Ausführungsform der Schaltungsanordnung;
- Fig. 4: eine schematische Darstellung einer weiteren Ausführungsform der Schaltungsanordnung;
- Fig. 5: eine schematische Darstellung einer weiteren Ausführungsform der Schaltungsanordnung;
- Fig. 6: eine schematische Darstellung einer weiteren Ausführungsform der Schaltungsanordnung;
- Fig. 7: ein schematisches Ablaufdiagramm des Verfahrens.

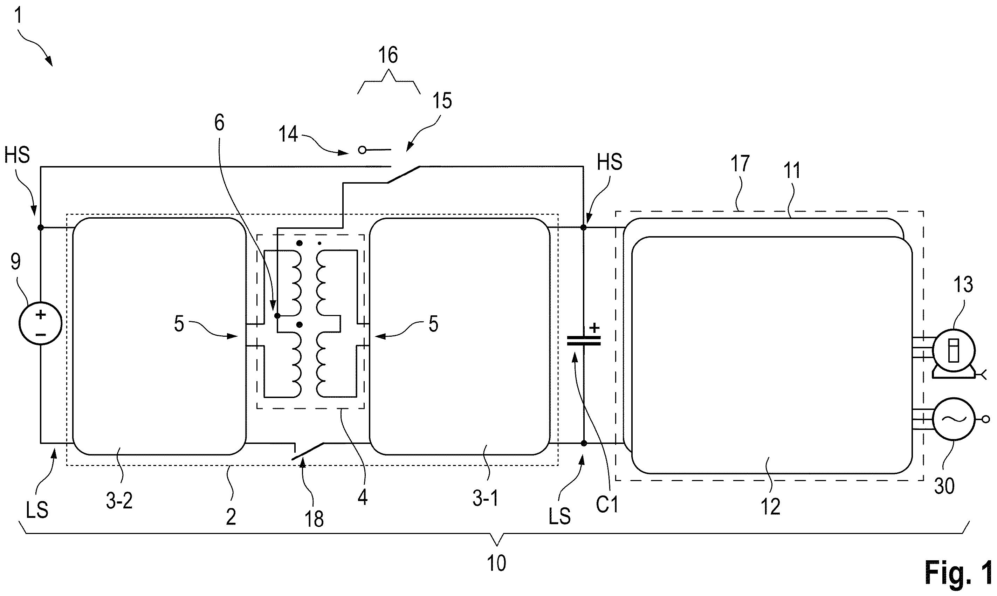

Die Fig. 1 zeigt eine schematische Darstellung von Ausführungsformen der Schaltungsanordnung 1. Die Schaltungsanordnung 1 umfasst ein On-Board-Ladegerät 2, wobei das On-Board-Ladegerät 2 eine erste Brückenschaltung 3-1, eine zweite Brückenschaltung 3-2 und ein magnetisches Kopplungsmittel 4 zur galvanischen Trennung aufweist.

Mittenabgriffe 5 der ersten Brückenschaltung 3-1 und der zweiten Brückenschaltung 3-2 sind über das magnetische Kopplungsmittel 4 miteinander verbunden.

Weiter weist die Schaltungsanordnung 1 einen Zwischenkreiskondensator C1 auf, wobei auf Seiten der zweiten Brückenschaltung 3-2 ein Mittenabgriff 6 an dem magnetischen Kopplungsmittel 4 abgegriffen ist und zumindest in mindestens einem ausgewählten Betriebszustand mit einer Highside HS des Zwischenkreiskondensators C1 verbunden ist.

Das magnetische Kopplungsmittel 4 kann als einzelner Transformator ausgebildet sein, der zumindest einseitig einen Mittenabgriff aufweist. Ferner kann das magnetische Kopplungsmittel 4 auch zwei Transformatoren aufweisen, wobei der Mittenabgriff 6 auf einer Seite dort angeordnet ist, wo Spulen der zwei Transformatoren elektrisch miteinander verbunden sind (in Reihe geschaltet sind).

Die Schaltungsanordnung 1 ist insbesondere Teil eines Traktionsstrangs 10 für ein Fahrzeug. Die zweite Brückenschaltung 3-2 ist hierzu auf einer Highside HS und einer Lowside LS mit einer (Hochvolt-)Batterie 9 verbunden. Der Zwischenkreiskondensator C1 ist insbesondere mit einer Pulswechselrichter-Schaltung 11 und einer Power Factor Converter-Schaltung 12 verbunden. Die Pulswechselrichter-Schaltung 11 ist ferner mit einer elektrischen Maschine 13 verbunden, welche von der Pulswechselrichter-Schaltung 11 gespeist wird. Die Power Factor Converter-Schaltung 12 kann zumindest zeitweise, das heißt, während eines Ladevorgangs, bei dem die (Hochvolt-)Batterie 9 geladen wird, mit einem Versorgernetz 30 verbunden sein.

Die Schaltungsanordnung 1 ermöglicht es, die zweite Brückenschaltung 3-2 des On-Board-Ladegeräts 2 als Tiefsetzsteller zu verwenden. Der über die zweite Brückenschaltung 3-2 und einen Teil des magnetischen Kopplungsmittels 4 ausgebildete Tiefsetzsteller kann zum Abwärtswandeln einer Batteriespannung der (Hochvolt-)Batterie 9 verwendet werden. Die abwärtsgewandelte Spannung liegt als Gleichstromzwischenkreisspannung am Zwischenkreiskondensator C1 an und wird somit der Pulswechselrichter-Schaltung 11 bereitgestellt.

Die Schaltungsanordnung 1 weist in der gezeigten Ausführungsform insbesondere einen Bypassschalter 14 auf, wobei der Bypassschalter 14 auf einer Seite mit einer Highside HS der zweiten Brückenschaltung 3-2 und auf einer anderen Seite zumindest in mindestens einem ausgewählten Betriebszustand mit der Highside HS des Zwischenkreiskondensators C1 verbunden ist. Der Bypassschalter 14 ist insbesondere geöffnet, wenn die zweite Brückenschaltung 3-2 als Tiefsetzsteller verwendet wird.

Ferner weist die Schaltungsanordnung 1 in der gezeigten Ausführungsform insbesondere einen Schalter 15 auf, wobei eine Seite des Schalters 15 mit dem Mittenabgriff 6 an dem magnetischen Kopplungsmittel 4 verbunden ist, und wobei eine andere Seite des Schalters 15 mit der Highside HS des Zwischenkreiskondensators C1 verbunden ist. Der Schalter 15 ist insbesondere geschlossen, wenn die zweite Brückenschaltung 3-2 als Tiefsetzsteller verwendet wird und beim Laden geöffnet.

In der gezeigten Ausführungsform weist die Schaltungsanordnung 1 insbesondere einen 3-Stellungsschalter 16 auf, wobei der 3-Stellungsschalter 16 über die Stellungen den Bypassschalter 14 und den Schalter 15 ausbildet. Hierzu ist auf einer Seite des 3-Stellungsschalters 16, die die Verbindungen für die drei möglichen Stellungen zeigt, eine Stellung für den Mittenabgriff 6 und eine Stellung für die Highside HS der zweiten Brückenschaltung 3-2 vorgesehen. Die dritte Stellung ist unverbunden/offen. Auf einer anderen Seite des 3-Stellungsschalters 16 ist dieser mit der Highside HS des Zwischenkreiskondensators C1 verbunden. Während der Verwendung der zweiten Brückenschaltung 3-2 als Tiefsetzsteller befindet sich der 3-Stellungsschalter in der ersten Stellung (Verbindung zum Mittenabgriff 6), beim Betrieb unter Volllast in der zweiten Stellung (Bypass bzw. direkte Verbindung zur Highside der zweiten Brückenschaltung bzw. zur (Hochvolt-)Batterie 9) und beim Laden der (Hochvolt-)Batterie 9 in der unverbundenen dritten Stellung. Es kann vorgesehen sein, dass der 3-Stellungsschalter 16 automatisiert gestellt wird.

Es ist bei den gezeigten Ausführungsformen insbesondere vorgesehen, dass die Schaltungsanordnung 1 einen weiteren Schalter 18 aufweist, wobei eine Seite des weiteren Schalters 18 mit einer Lowside LS der zweiten Brückenschaltung 3-2 und eine andere Seite des weiteren Schalters 18 mit einer Lowside LS des Zwischenkreiskondensators C1 verbunden ist. Es ist insbesondere vorgesehen, dass der weitere Schalter 18 beim Laden mittels des On-Board-Ladegeräts 2 geöffnet ist oder geöffnet wird. Es ist ferner insbesondere vorgesehen, dass der weitere Schalter 18 im Betriebszustand, in dem die zweite Brückenschaltung 3-2 als Tiefsetzsteller verwendet wird, geschlossen ist oder geschlossen wird.

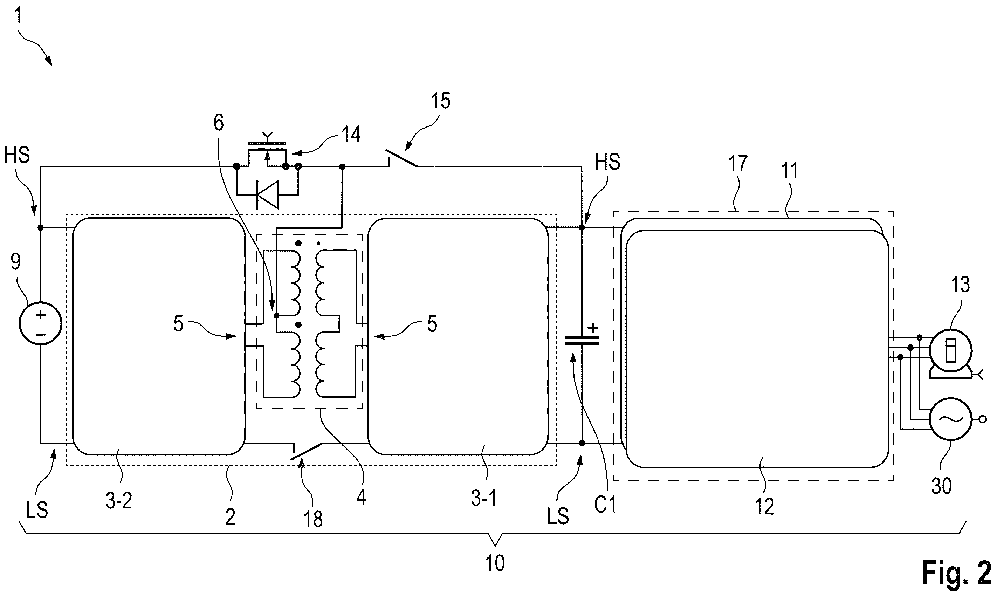

Die Fig. 2 zeigt eine schematische Darstellung einer weiteren Ausführungsform der Schaltungsanordnung 1. Die weitere Ausführungsform ist grundsätzlich wie die in der Fig. 1 gezeigte Ausführungsform ausgestaltet, gleiche Bezugszeichen bezeichnen gleiche Merkmale und Begriffe. Es ist bei dieser Ausführungsform vorgesehen, dass der Bypassschalter 14 als Halbleiterschalter ausgebildet ist. Der Schalter 15 ist insbesondere als einfacher Schalter ausgebildet. Es ist insbesondere vorgesehen, dass der Mittenabgriff 6 mit der anderen Seite des Bypassschalters 14 verbunden ist. Der Mittenabgriff 6 und die andere Seite des Bypassschalters 14 sind mit der einen Seite des Schalters 15 verbunden, die andere Seite des Schalters 15 ist mit der Highside HS des Zwischenkreiskondensators C1 verbunden. Die Funktionsweise ist ansonsten die gleiche wie bei der Schaltungsanordnung 1 bzw. dem Traktionsstrang 10 der in der Fig. 1 gezeigten Ausführungsformen.

Es kann bei den in den Figuren 1 und 2 gezeigten Ausführungsformen vorgesehen sein, dass die Schaltungsanordnung 1 eine kombinierte Pulswechselrichter-/Power Factor Converter-Schaltung 17 umfasst, welche mit dem Zwischenkreiskondensator C1 verbunden ist.

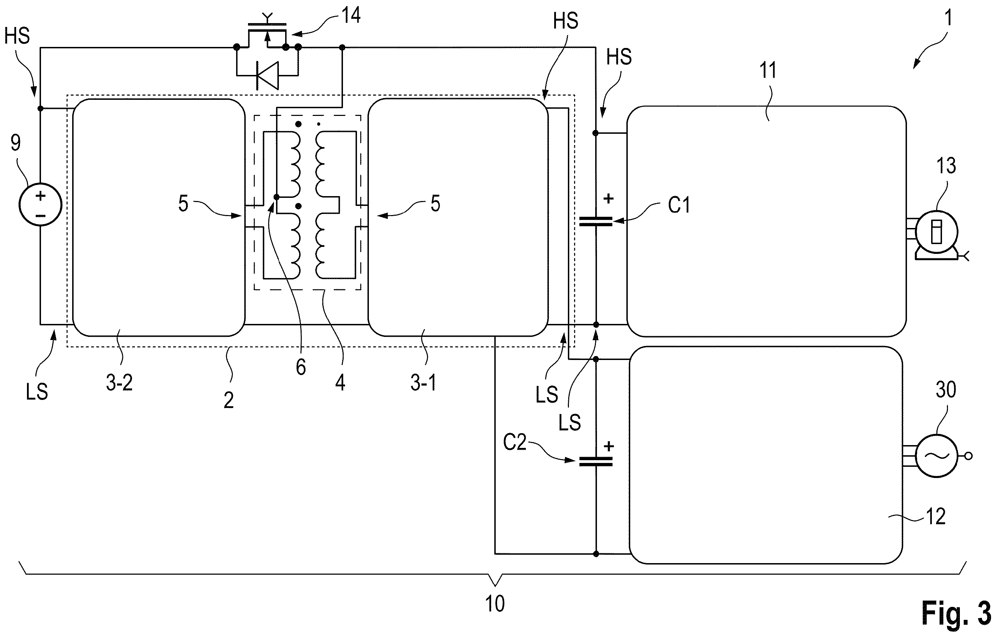

Die Fig. 3 zeigt eine schematische Darstellung einer weiteren Ausführungsform der Schaltungsanordnung 1. Die weitere Ausführungsform ist grundsätzlich wie die in den Figuren 1 und 2 gezeigten Ausführungsformen ausgestaltet, gleiche Bezugszeichen bezeichnen gleiche Merkmale und Begriffe. Es ist bei dieser Ausführungsform vorgesehen, dass die Schaltungsanordnung 1 eine Pulswechselrichterschaltung 11 und eine Power Factor Converter-Schaltung 12 umfasst, wobei die Pulswechselrichterschaltung 11 mit dem Zwischenkreiskondensator C1 verbunden ist und wobei die Power-Factor Converter-Schaltung 12 mit einer Highside HS und einer Lowside LS der ersten Brückenschaltung 3-1 verbunden ist. Die Highside HS und die Lowside LS der ersten Brückenschaltung 3-1 sind ferner insbesondere mit einem weiteren Zwischenkreiskondensator C2 verbunden.

Da hier insbesondere die Highsides HS der Pulswechselrichterschaltung 11 und der Power-Factor-Schaltung 12 unterschiedlich sind, können der Schalter (vgl. Figuren 1 und 2, Bezugszeichen 15) und der weitere Schalter (vgl. Figuren 1 und 2, Bezugszeichen 18) entfallen. Ein Anwendungsfall für diese Ausführungsform ist insbesondere, wenn Zwischenkreisspannungen (das heißt, die Spannungen an den Zwischenkreiskondensatoren C1 bzw. C2) der Pulswechselrichterschaltung 11 und der Power Factor Converter-Schaltung 12 unterschiedlich sind. Beispielsweise kann vorgesehen sein, dass der Pulswechselrichter 11 bei einer (Batterie-)Spannung von 400 V (400-V-Batterie) arbeitet, die Power Factor Converter-Schaltung 12 hingegen eine Spannung von >700 V benötigt, was insbesondere ein typischer Fall für eine Power Factor Converter-Schaltung 12 ist, die an ein dreiphasiges Versorgernetz angebunden ist.

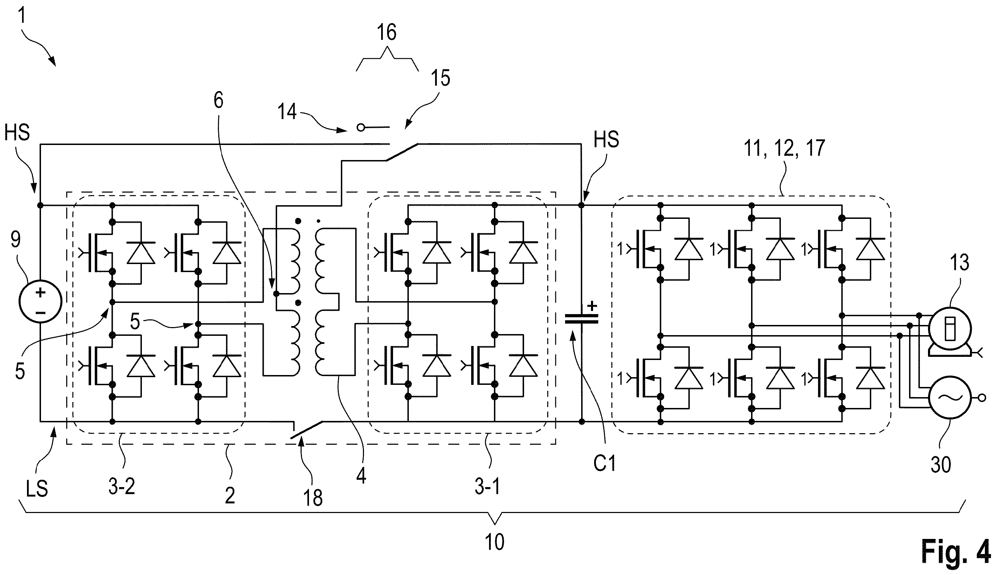

Die Fig. 4 zeigt eine schematische Darstellung einer Ausführungsform der Schaltungsanordnung 1 als Dual-Active-Bridge. Die Ausführungsform ist grundsätzlich wie die in Fig. 1 gezeigte Ausführungsform ausgestaltet, gleiche Bezugszeichen bezeichnen gleiche Merkmale und Begriffe. Die erste Brückenschaltung 3-1 und die zweite Brückenschaltung 3-2 sind als 2-Level-Brücken mit jeweils zwei Halbbrücken ausgebildet. Die Pulswechselrichter-Schaltung 11 und die Power Factor Converter-Schaltung 12 sind in Form einer kombinierten Pulswechselrichter-/Power Factor Converter-Schaltung 17 mit zwei Spannungsniveaus (zwei Level, 2L) und drei Halbbrücken für insgesamt drei Phasen ausgestaltet.

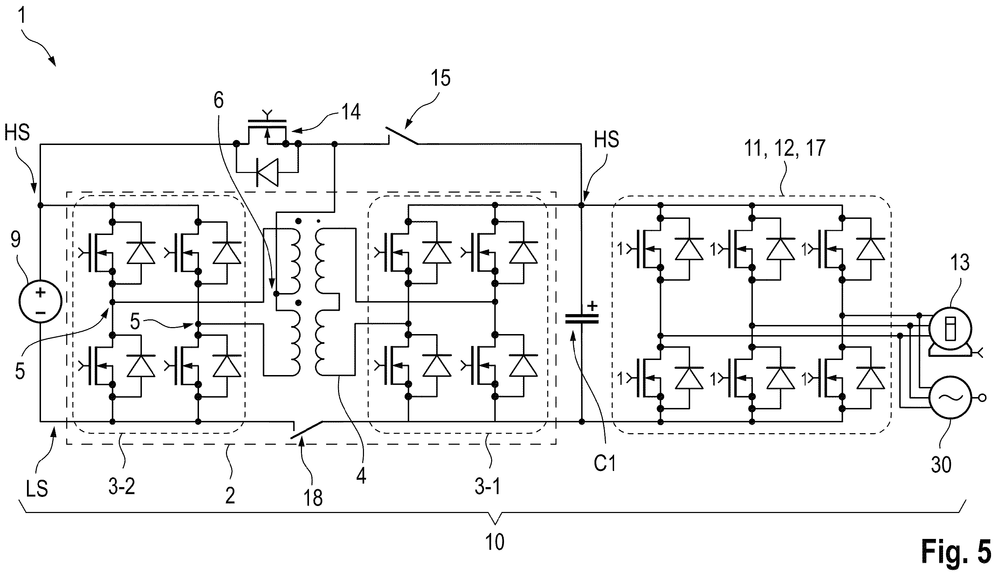

Die Fig. 5 zeigt eine schematische Darstellung einer Ausführungsform der Schaltungsanordnung 1 als Dual-Active-Bridge. Die Ausführungsform ist grundsätzlich wie die in Fig. 2 gezeigte Ausführungsform ausgestaltet, gleiche Bezugszeichen bezeichnen gleiche Merkmale und Begriffe. Die erste Brückenschaltung 3-1 und die zweite Brückenschaltung 3-2 sind als 2-Level-Brücken mit jeweils zwei Halbbrücken ausgebildet. Die Pulswechselrichter-Schaltung 11 und die Power Factor Converter-Schaltung 12 sind in Form einer kombinierten Pulswechselrichter-/Power Factor Converter-Schaltung 17 mit zwei Spannungsniveaus (zwei Level, 2L) und drei Halbbrücken für insgesamt drei Phasen ausgestaltet.

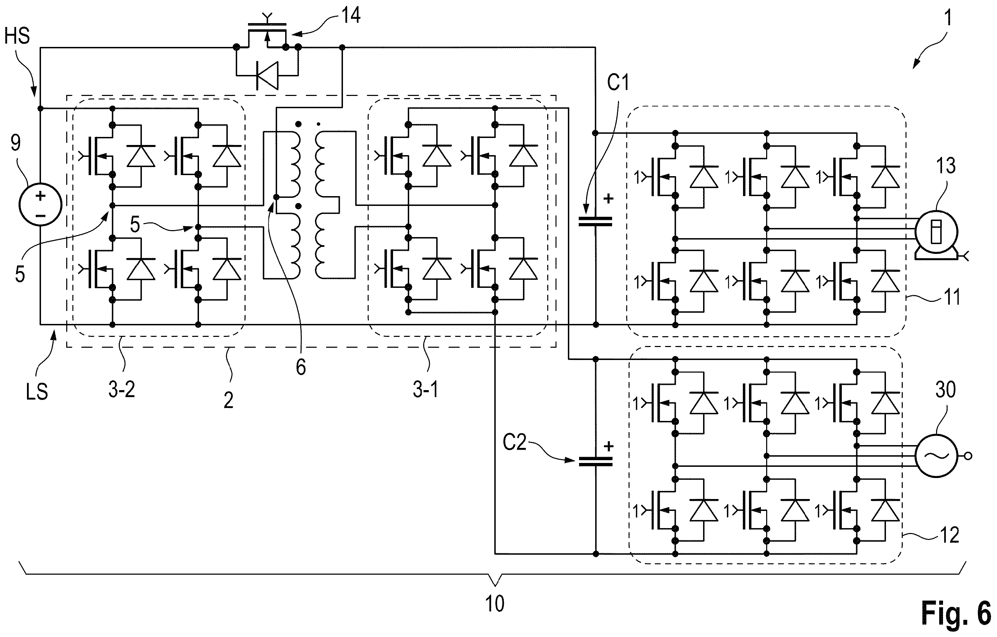

Die Fig. 6 zeigt eine schematische Darstellung einer Ausführungsform der Schaltungsanordnung 1 als Dual-Active-Bridge. Die Ausführungsform ist grundsätzlich wie die in Fig. 3 gezeigte Ausführungsform ausgestaltet, gleiche Bezugszeichen bezeichnen gleiche Merkmale und Begriffe. Die erste Brückenschaltung 3-1 und die zweite Brückenschaltung 3-2 sind als 2-Level-Brücken mit jeweils zwei Halbbrücken ausgebildet. Die Pulswechselrichter-Schaltung 11 und die Power Factor Converter-Schaltung 12 sind jeweils mit zwei Spannungsniveaus (zwei Level, 2L) und drei Halbbrücken für insgesamt drei Phasen ausgestaltet.

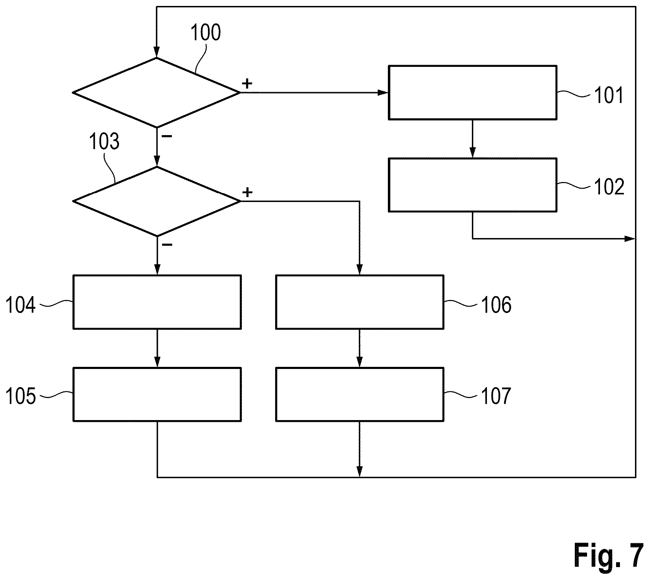

Die Fig. 7 zeigt ein schematisches Ablaufdiagramm einer Ausführungsform des Verfahrens zum Betreiben eines Traktionsstrangs eines Fahrzeugs. Das Verfahren umfasst das Betreiben einer Schaltungsanordnung gemäß einer der in dieser Offenbarung beschriebenen Ausführungsformen.

In einem Verfahrensschritt 100 wird überprüft, ob ein aktueller Betriebszustand das Laden mittels des On-Board-Ladegeräts vorsieht. Ist dies der Fall, so werden insbesondere in einem Verfahrensschritt 101 bei den in den Figuren 1 und 2 gezeigten Ausführungsformen die Schalter 15 und 18 geöffnet. Die beiden Brückenschaltungen des On-Board-Ladegeräts sind in diesem Fall galvanisch voneinander getrennt. Es findet dann in einem Verfahrensschritt 102 das Laden statt (Betriebszustand Laden). Nach Abschluss des Ladens wird zu Verfahrensschritt 100 zurückgekehrt. Ist dies hingegen nicht der Fall, so wird mit Verfahrensschritt 103 fortgefahren.

In Verfahrensschritt 103 wird überprüft, ob eine Volllast vorliegt oder nicht. Ist dies nicht der Fall, so wird insbesondere in einem Verfahrensschritt 104 der Bypassschalter 14 (vgl. Figuren 1 bis 3) geöffnet (sofern dieser nicht bereits geöffnet war). In einem Verfahrensschritt 105 wird die zweite Brückenschaltung des On-Board-Ladegeräts in diesem ausgezeichneten Betriebszustand (Fahrmodus, keine Volllast) als Tiefsetzsteller verwendet und entsprechend angesteuert. Hierbei wird die Batteriespannung auf eine geringere Spannung als die Batteriespannung heruntergesetzt. Ergibt das Überprüfen in Verfahrensschritt 103 hingegen, dass Volllast vorliegt, so wird in diesem Betriebszustand (Fahrmodus, Volllast) in einem Verfahrensschritt 106 insbesondere der Bypassschalter 14 geschlossen (sofern dieser nicht bereits geschlossen war). In einem Verfahrensschritt 107 wird die volle Batteriespannung bereitgestellt als Gleichstromzwischenkreisspannung. Nach Abschluss wird insbesondere zu Verfahrensschritt 100 zurückgekehrt.

### Bezugszeichenliste

- 1: Schaltungsanordnung
- 2: On-Board-Ladegerät
- 3-1: erste Brückenschaltung
- 3-2: zweite Brückenschaltung
- 4: magnetisches Kopplungsmittel
- 5: Mittenabgriff (Brückenschaltung)
- 6: Mittenabgriff (magnetisches Kopplungsmittel)
- 9: (Hochvolt-)Batterie
- 10: Traktionsstrang
- 11: Pulswechselrichter-Schaltung
- 12: Power Factor Converter-Schaltung
- 13: elektrische Maschine
- 14: Bypassschalter
- 15: Schalter
- 16: 3-Stellungsschalter
- 17: kombinierte Pulswechselrichter-/Power Factor Converter-Schaltung
- 18: weiterer Schalter
- 30: Versorgernetz
- 100-107: Verfahrensschritte
- C1: Zwischenkreiskondensator
- C2: weiterer Zwischenkreiskondensator
- HS: Highside
- LS: Lowside

## Patentansprüche

1. Schaltungsanordnung (1), umfassend:
ein On-Board-Ladegerät (2), wobei das On-Board-Ladegerät (2) eine erste Brückenschaltung (3-1), eine zweite Brückenschaltung (3-2) und ein magnetisches Kopplungsmittel (4) zur galvanischen Trennung aufweist, wobei Mittenabgriffe (5) der ersten Brückenschaltung (3-1) und der zweiten Brückenschaltung (3-2) über das magnetische Kopplungsmittel (4) miteinander verbunden sind, und
einen Zwischenkreiskondensator (C1),
wobei auf Seiten der zweiten Brückenschaltung (3-2) ein Mittenabgriff (6) an dem magnetischen Kopplungsmittel (4) abgegriffen ist und zumindest in mindestens einem ausgewählten Betriebszustand mit einer Highside (HS) des Zwischenkreiskondensators (C1) verbunden ist.

2. Schaltungsanordnung (1) nach Anspruch 1, **gekennzeichnet durch** einen Bypassschalter (14), wobei der Bypassschalter (14) auf einer Seite mit einer Highside (HS) der zweiten Brückenschaltung (3-2) und auf einer anderen Seite zumindest in mindestens einem ausgewählten Betriebszustand mit der Highside (HS) des Zwischenkreiskondensators (C1) verbunden ist.

3. Schaltungsanordnung (1) nach einem der vorangegangenen Ansprüche, **gekennzeichnet durch** einen Schalter (15), wobei eine Seite des Schalters (15) mit dem Mittenabgriff (6) an dem magnetischen Kopplungsmittel (4) verbunden ist, und wobei eine andere Seite des Schalters (15) mit der Highside (HS) des Zwischenkreiskondensators (C1) verbunden ist.

4. Schaltungsanordnung (1) nach Anspruch 2 oder 3, **dadurch gekennzeichnet, dass** der Bypassschalter (14) als Halbleiterschalter ausgebildet ist.

5. Schaltungsanordnung (1) nach Anspruch 3, **gekennzeichnet durch** einen 3-Stellungsschalter (16), wobei der 3-Stellungsschalter (16) über die Stellungen den Bypassschalter (14) und den Schalter (15) ausbildet.

6. Schaltungsanordnung (1) nach einem der vorangegangenen Ansprüche, **dadurch gekennzeichnet, dass** die Schaltungsanordnung (1) eine Pulswechselrichterschaltung (11) und eine Power Factor Converter-Schaltung (12) umfasst, wobei die Pulswechselrichterschaltung (11) und die Power Factor-Schaltung (12) beide mit dem Zwischenkreiskondensator (C1) verbunden sind.

7. Schaltungsanordnung (1) nach einem Ansprüche 1 bis 5, **dadurch gekennzeichnet, dass** die Schaltungsanordnung (1) eine Pulswechselrichterschaltung (11) und eine Power Factor Converter-Schaltung (12) umfasst, wobei die Pulswechselrichterschaltung (11) mit dem Zwischenkreiskondensator (C1) verbunden ist, wobei die Power-Factor-Schaltung (12) mit einer Highside (HS) und einer Lowside (LS) der ersten Brückenschaltung (3-1) verbunden ist.

8. Schaltungsanordnung (1) nach einem Ansprüche 1 bis 6, **dadurch gekennzeichnet, dass** die Schaltungsanordnung (1) eine kombinierte Pulswechselrichter-/Power Factor Converter-Schaltung (17) umfasst, welche mit dem Zwischenkreiskondensator (C1) verbunden ist.

9. Traktionsstrang (10) für ein Fahrzeug, umfassend:
eine Schaltungsanordnung (1) nach einem der Ansprüche 1 bis 8,
wobei die zweite Brückenschaltung (3-2) auf einer Highside (HS) und einer Lowside (LS) mit einer (Hochvolt-)Batterie (9) verbunden ist.

10. Verfahren zum Betreiben eines Traktionsstrangs (10) eines Fahrzeugs, umfassend: Betreiben einer Schaltungsanordnung (1) gemäß einem der Ansprüche 1 bis 8, wobei die zweite Brückenschaltung (3-2) des On-Board-Ladegeräts (2) der Schaltungsanordnung (1) zumindest in einem ausgewählten Betriebszustand als Tiefsetzsteller betrieben wird.

11. Verfahren nach Anspruch 10, **dadurch gekennzeichnet, dass** bei Überschreiten einer vorgegebenen Leistungsgröße einer über die Schaltungsanordnung (1) gespeisten elektrischen Maschine (13) mittels eines Bypassschalters (14) eine elektrische Verbindung zwischen einer Highside (HS) der zweiten Brückenschaltung (3-2) und dem Zwischenkreiskondensator (C1) hergestellt wird.

12. Verfahren nach Anspruch 10 oder 11, **dadurch gekennzeichnet, dass** eine Verbindung zwischen dem Mittenabgriff (6) an dem magnetischen Kopplungsmittel (4) und dem Zwischenkreiskondensator (C1) mittels eines Schalters (15) getrennt wird, wenn das On-Board-Ladegerät (4) zum Laden verwendet wird.
